# EUROPEAN PATENT APPLICATION

(11) **EP 4 797 404 A1**
(43) Date of publication of application: **26.08.2026**
(21) Application number: 24879657.5
(22) Date of filing: 11.10.2024
(51) Int. Cl.: H01M 50/242, H01M 50/202, H01M 50/224, H01M 50/244, H01M 50/247, H01M 50/271, H01M 50/278, H01M 50/284, H01M 50/296, H04M 1/02

(54) **ELECTRONIC APPARATUS, BATTERY PACK, AND METHOD FOR MANUFACTURING BATTERY PACK**

(30) Priority: 19.10.2023 JP 2023180412
(71) Applicant: Sony Group Corporation, Tokyo 108-0075 (JP)
(72) Inventor: AKASAWA, Hidetoshi, Tokyo 108-0075 (JP); FURUYA, Tatsuya, Tokyo 108-0075 (JP)
(74) Representative: D Young & Co LLP
(86) International application number: PCT/JP2024/036414
(87) International publication number: WO 2025/084232

(57) **Abstract**

An electronic apparatus according to an embodiment of the present disclosure includes an apparatus body and a battery pack provided in the apparatus body, in which the battery pack includes a battery cell, an exterior material wound around the battery cell, and a top cover and a bottom cover provided at opening portions at both ends of the exterior material so as to sandwich the battery cell wound with the exterior material, and sealing the battery cell.

## Description

### Technical Field

The present disclosure relates to an electronic apparatus, a battery pack, and a manufacturing method for a battery pack.

### Background Art

In the related art, various electronic apparatuses such as a mobile phone represented by a smartphone and a tablet computer are known. In these electronic apparatuses, a secondary battery capable of being repeatedly charged and discharged is used. As one aspect of such a secondary battery, a lithium ion secondary battery is widely used because of various advantages such as a high voltage, a high energy density, a long cycle life, and capability of rapid charging.

A lithium ion secondary battery is generally used in the form of a battery pack with built-in battery cell, protection circuit, and the like. A circuit board is connected to the battery cell, a laminate sheet is wound around the battery cell, and a top cover and a bottom cover are mounted on the battery cell around which the laminate sheet is wound, and thus the battery pack is formed (for example, see PTL 1).

### Citation List

### Patent Literature

PTL 1: JP 2019-160467 A

### Summary

### Technical Problem

However, the top cover and the bottom cover may be fixed to the battery cell by, for example, a laminate sheet or an adhesive. In this case, rigidity of the battery pack is insufficient, and the battery pack cannot withstand handling by a user. Thus, there is a demand for an improvement in the rigidity of the battery pack.

In view of this, an object of the present disclosure is to provide an electronic apparatus, a battery pack, and a manufacturing method for a battery pack that can improve rigidity of the battery pack.

### Solution to Problem

An electronic apparatus according to an embodiment of the present disclosure includes an apparatus body and a battery pack provided in the apparatus body, in which the battery pack includes a battery cell, an exterior material wound around the battery cell, and a top cover and a bottom cover provided at opening portions at both ends of the exterior material so as to sandwich the battery cell wound with the exterior material, and sealing the battery cell.

A battery pack according to an embodiment of the present disclosure includes a battery cell, an exterior material wound around the battery cell, and a top cover and a bottom cover provided at opening portions at both ends of the exterior material so as to sandwich the battery cell around which the exterior material is wound, and sealing the battery cell.

A manufacturing method for a battery pack according to an embodiment of the present disclosure includes winding an exterior material around a battery cell and providing a top cover and a bottom cover at opening portions at both ends of the exterior material so as to sandwich the battery cell around which the exterior material is wound, and sealing the battery cell.

### Brief Description of Drawings

[Fig. 1] Fig. 1 is a perspective view depicting an appearance example of a battery pack according to a first embodiment.
[Fig. 2] Fig. 2 is an exploded perspective view depicting a configuration example of the battery pack according to the first embodiment.
[Fig. 3] Fig. 3 is a cross-sectional view depicting the configuration example of the battery pack according to the first embodiment.
[Fig. 4] Fig. 4 is a diagram depicting a planar surface and a bottom surface of the configuration example of the battery pack according to the first embodiment.
[Fig. 5] Fig. 5 is a diagram depicting a configuration example of a battery pack of a comparative example according to the first embodiment.
[Fig. 6] Fig. 6 is a cross-sectional view depicting a configuration example of a battery pack according to a second embodiment.
[Fig. 7] Fig. 7 is a diagram depicting a planar surface and a bottom surface of the configuration example of the battery pack according to the second embodiment.
[Fig. 8] Fig. 8 is a diagram depicting a planar surface and a bottom surface of a configuration example of a battery pack of a modification according to a second embodiment.
[Fig. 9] Fig. 9 is a diagram describing an example of a manufacturing method for the battery pack according to the first or second embodiment.
[Fig. 10] Fig. 10 is a diagram depicting a configuration example of an electronic apparatus including the battery pack according to the first or second embodiment.

### Description of Embodiments

In the following, embodiments of the present disclosure will be described in detail with reference to the drawings. The embodiments include examples, modifications, and the like. The electronic apparatus, the battery pack, the manufacturing method for a battery pack, and the like according to the present disclosure are not limited by the embodiments. In addition, in the following embodiments, redundant descriptions are basically omitted by assigning the same reference numerals to components that are substantially the same.

One or multiple embodiments below can each be implemented independently. On the other hand, at least part of each of the multiple embodiments below may be implemented in combination with at least part of another embodiment as appropriate. These multiple embodiments may include mutually different novel features. Thus, each embodiment may serve different purposes or solve different problems and may achieve different effects. Note that the effects in the embodiments are merely examples and are not limited, and other effects may be provided.

The present disclosure will be described in accordance with the following itemized order.
1. First Embodiment
   1-1. Configuration Example of Battery Pack
   1-2. Comparative Example
2. Second Embodiment
   2-1. Configuration Example of Battery Pack
   2-2. Modification
3. Manufacturing Method for Battery Pack According to Each Embodiment
4. Application Example of Battery Pack According to Each Embodiment
   4-1. Configuration Example of Electronic Apparatus
5. Operations and Effects of Each Embodiment
6. Other Embodiments
7. Supplementary Notes

In the present specification, for example, a structure including a battery element before being enclosed with an exterior material is referred to as a battery cell, and a product obtained by connecting a circuit board to the battery cell and mounting the exterior material, a top cover, and a bottom cover thereon is referred to as a battery pack. In the battery pack, the battery cell, and the exterior material, a leading side of a positive electrode terminal and a negative electrode terminal is referred to as a top portion, a side facing the top portion is referred to as a bottom portion, and the others are referred to as side portions. A length in a direction of both side portions may be referred to as a width, and a length in a direction between the top portion and the bottom portion may be referred to as a height.

### 1. First Embodiment

### 1-1. Configuration Example of Battery Pack

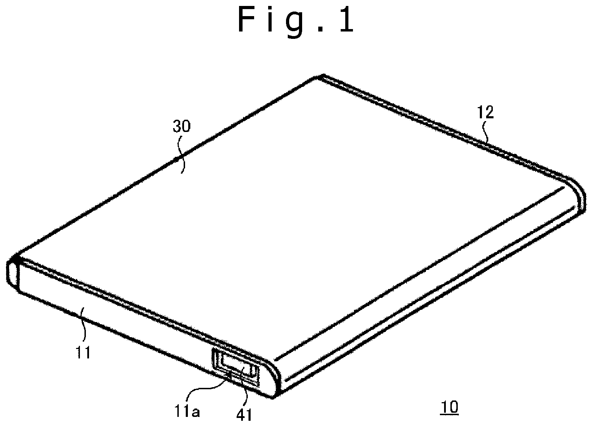

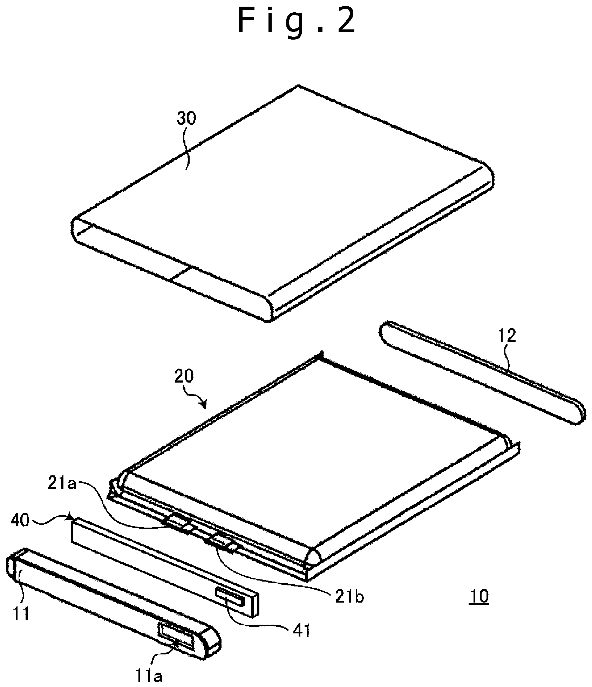

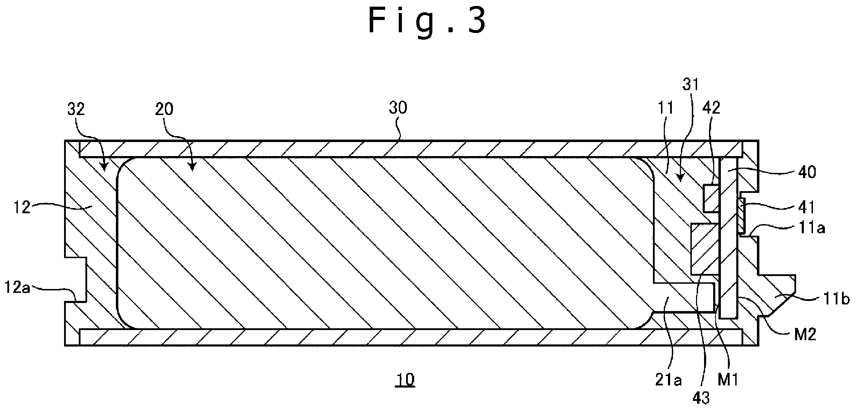

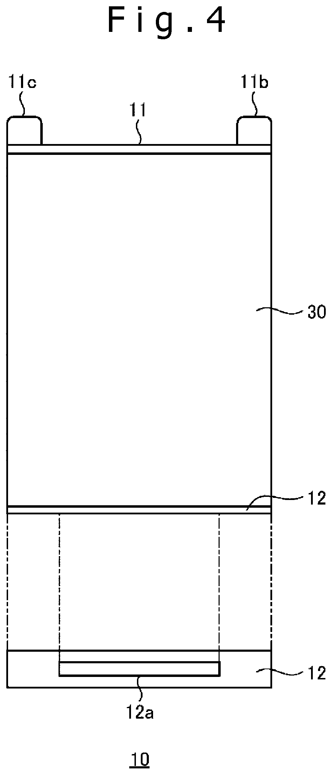

A configuration example of a battery pack 10 according to the present embodiment will be described with reference to Figs. 1 to 4. Fig. 1 is a perspective view depicting an appearance example of the battery pack 10 according to the present embodiment. Fig. 2 is an exploded perspective view depicting a configuration example of the battery pack 10 according to the present embodiment. Fig. 3 is a cross-sectional view depicting the configuration example of the battery pack 10 according to the present embodiment. Fig. 4 is a diagram depicting a planar surface and a bottom surface of the configuration example of the battery pack 10 according to the present embodiment.

As depicted in Fig. 1, the battery pack 10 is a device of a lithium ion secondary battery of, for example, a rectangular type or flat type. The battery pack 10 is mounted on, for example, an electronic apparatus. The electronic apparatus may be configured such that the battery pack 10 is not attachable and detachable by the user, or may be configured such that the battery pack 10 is attachable and detachable by the user. Examples of the electronic apparatus include a mobile phone such as a smartphone, and a personal computer of a tablet type or a notebook type. The configuration of the electronic apparatus will be described in detail later.

As depicted in Figs. 2 and 3, the battery pack 10 includes a battery cell 20, a top cover 11, a bottom cover 12, a circuit board 40, and an exterior material 30. The top cover 11 may be referred to as a top holder, and the bottom cover 12 may be referred to as a bottom holder.

The battery cell 20 includes a battery element covered with, for example, a laminate film such as a soft aluminum sheet. The battery element is electrically connected to the circuit board 40. The exterior material 30 is wound around and attached to the outer periphery of the battery cell 20. Openings are formed in a top portion 31 and a bottom portion 32 (see Fig. 3) of the exterior material 30 wound around the battery cell 20. The top cover 11 is mounted on the top portion 31, and the bottom cover 12 is mounted on the bottom portion 32. Each of the top portion 31 and the bottom portion 32 functions as an opening portion including an opening.

### Battery Cell

The battery cell 20 includes the battery element including a positive electrode terminal 21a and a negative electrode terminal 21b (see Fig. 2). The positive electrode terminal 21a and the negative electrode terminal 21b of the battery element are led out to one end side of the battery element, and are covered with an insulating sheet (not illustrated) except for, for example, a connection portion to the circuit board 40. The battery cell 20 is formed in a thin plate shape such as a flat type in order to correspond to miniaturization or thinning of the electronic apparatus.

The battery element is, for example, a laminate in which a positive electrode, a separator, a negative electrode, and a separator are laminated in this order. The battery element may be a battery element of a winding type in which a belt-shaped laminate is wound. The positive electrode terminal 21a is connected to the positive electrode of the battery element , and the negative electrode terminal 21b is connected to the negative electrode. Such a battery element is covered with a laminate film to form the battery cell 20. The inside of the laminate film is filled with an electrolyte together with the battery element. Such a battery element may be a known battery element.

### Circuit Board

As depicted in Fig. 3, the circuit board 40 is provided at an end of the battery cell 20, specifically, on the top portion 31 of the exterior material 30 wound around the battery cell 20. The circuit board 40 is fixed to the battery cell 20 and the exterior material 30 by the top cover 11. The positive electrode terminal 21a and the negative electrode terminal 21b of the battery element of the battery cell 20 are connected to the circuit board 40.

The circuit board 40 is mounted with a connection terminal 41, a temperature detection element 42, and various elements 43 such as a fuse and a thermal resistance element. The circuit board 40 has a first principal surface M1 on the battery cell 20 side and a second principal surface M2 on the opposite side to the battery cell 20 side. The temperature detection element 42 and other various elements 43 are provided on the first principal surface M1. The connection terminal 41 is provided on the second principal surface M2.

In the example of Fig. 3, the first principal surface M1 and the second principal surface M2 are parallel to a surface of the battery cell 20 on the first principal surface M1 side. Thus, the circuit board 40 is parallel to the surface of the battery cell 20 on the first principal surface M1 side. That is, the circuit board 40 is provided so as to be perpendicular to the planar direction (for example, an extending direction of the battery cell 20) of the battery cell 20. The parallel includes substantially parallel in addition to completely parallel, and the perpendicular includes substantially perpendicular in addition to completely perpendicular.

The connection terminal 41 is a terminal connected to a connection terminal of the electronic apparatus on an apparatus body side. The connection terminal 41 is configured by, for example, a plurality of contacts or connectors. The connection terminal 41 is mounted on, for example, an end of the circuit board 40 in the width direction (see Fig. 2). The temperature detection element 42 is mounted at, for example, a central portion of the circuit board 40 in the width direction. The various elements 43 are mounted at, for example, positions other than the central portion of the circuit board 40 in the width direction. The various elements 43 include, for example, a thermal resistance element and a fuse.

A protection circuit including, for example, the temperature detection element 42 and various elements 43 is formed on the circuit board 40. For example, a charge/discharge control field effect transistor (FET) (not illustrated) and an integrated circuit (IC) (not illustrated) that monitors the secondary battery and controls the charge/discharge control FET are mounted on the protection circuit.

The temperature detection element 42 is, for example, a thermistor, and the electrical resistance thereof changes due to a change in the temperature of the temperature detection element 42. The protection circuit monitors the temperature detected by the temperature detection element 42, and when the detected temperature exceeds a preset threshold value, the protection circuit turns off a charge control FET to prohibit or suspend charging, or transmits temperature information to a charging circuit provided on the apparatus body side to reduce a voltage during charging.

The thermal resistance element is, for example, a positive temperature coefficient (PTC) element, and is connected in series to the battery element of the battery cell 20. When the temperature of the thermal resistance element becomes higher than a set temperature, the electric resistance of the thermal resistance element rapidly increases, and a current flowing through the battery element is substantially blocked. The fuse is connected in series to the battery element, and when an overcurrent flows through the battery element, the fuse is melted by its own current to block the current. A heater resistor is provided in the vicinity of the fuse, and the fuse is melted by the temperature rise of the heater resistor at the time of overvoltage, thereby blocking the current.

When a terminal voltage of the battery cell 20 becomes high, heat generation, ignition, or the like may occur. Thus, the protection circuit monitors the voltage of the battery cell 20, and turns off the charge control FET to prohibit charging when the battery cell 20 is in an overcharged state in which the voltage rises. When the battery cell 20 is in an overdischarged state in which the terminal voltage of the battery cell 20 is reduced and becomes 0 V, the battery cell 20 may be in an internal short-circuit state and may become nonrechargeable. Thus, the protection circuit monitors the voltage of the battery cell 20, and turns off the discharge control FET to prohibit the discharge when the battery cell 20 is in the overdischarged state.

### Top Cover

As depicted in Fig. 3, the top cover 11 is provided at an end of the battery cell 20, specifically, on the top portion 31 of the exterior material 30 wound around the battery cell 20. The top cover 11 is a member that seals the battery cell 20 together with the exterior material 30 and the bottom cover 12. The top cover 11 is formed by filling the top portion 31 of the exterior material 30 wound around the battery cell 20 with a material (for example, a resin material) for forming the top cover 11, and is fixed to the battery cell 20 and the exterior material 30.

In the example of Fig. 3, the entire surface of the top cover 11 on the battery cell 20 side is in contact with the battery cell 20. It is sufficient that at least a part of the surface of the top cover 11 on the battery cell 20 side is in contact with the battery cell 20, but it is preferable that the entire surface of the top cover 11 on the battery cell 20 side is in contact with the battery cell 20 for purposes such as fixing the battery cell 20.

The top cover 11 covers and seals the circuit board 40. For example, the top cover 11 is in contact with substantially the entire surface of the circuit board 40 and covers substantially the entire surface of the circuit board 40. However, an opening 11a is provided in the top cover 11 at a position corresponding to the connection terminal 41 so that the connection terminal 41 of the circuit board 40 is exposed to the outside. That is, the top cover 11 covers the circuit board 40 while exposing the connection terminal 41 on the circuit board 40. The connection terminal 41 of the circuit board 40 is in contact with the connection terminal of the electronic apparatus on the apparatus body side through the opening 11a of the top cover 11. Accordingly, the battery pack 10 and the electronic apparatus body are electrically connected to each other.

As depicted in Figs. 3 and 4, the top cover 11 includes a plurality of protrusions 11b and 11c. The protrusions 11b and 11c are provided, for example, at both ends of the top surface of the top cover 11, and are formed in a rectangular shape in a plan view (see Fig. 4). The protrusions 11b and 11c function as fixing portions for fixing the battery pack 10 to the apparatus body of the electronic apparatus. Recesses corresponding to the protrusions 11b and 11c of the top cover 11 are formed in the apparatus body of the electronic apparatus. Each of the protrusions 11b and 11c of the top cover 11 is fitted to a respective one of the recesses of the apparatus main body. In the examples of Figs. 1 and 2, the protrusions 11b and 11c are omitted.

### Bottom Cover

As depicted in Fig. 3, the bottom cover 12 is provided at an end of the battery cell 20, specifically, on the bottom portion 32 of the exterior material 30 wound around the battery cell 20. The bottom cover 12 is a member that seals the battery cell 20 together with the exterior material 30 and the top cover 11. The bottom cover 12 is formed by filling the bottom portion 32 of the exterior material 30 wound around the battery cell 20 with a material (for example, a resin material) for forming the bottom cover 12, and is fixed to the battery cell 20 and the exterior material 30.

In the example of Fig. 3, the entire surface of the bottom cover 12 on the battery cell 20 side is in contact with the battery cell 20. It is sufficient that at least a part of the surface of the bottom cover 12 on the battery cell 20 side is in contact with the battery cell 20, but it is preferable that the entire surface of the bottom cover 12 on the battery cell 20 side is in contact with the battery cell 20 for purposes such as fixing the battery cell 20.

As depicted in Figs. 3 and 4, the bottom cover 12 includes a recess 12a. The recess 12a is formed, for example, in a rectangular shape in a plan view at the center of a bottom surface of the bottom cover 12 (see

Fig. 4). The recess 12a functions as a fixing portion for fixing the battery pack 10 to the apparatus body of the electronic apparatus. The apparatus body of the electronic apparatus includes a protrusion corresponding to the recess 12a of the bottom cover 12. The recess 12a of the bottom cover 12 is fitted to the protrusion of the apparatus body. The fitting of the recess 12a of the bottom cover 12 to the apparatus body and the fitting of the protrusions 11b and 11c of the top cover 11 to the apparatus body are performed, and thus the battery pack 10 is fixed to the apparatus body.

### Exterior Material

As depicted in Fig. 2, the exterior material 30 has a substantially rectangular shape and is attached to the battery cell 20 so as to wrap the battery cell 20. The exterior material 30 is formed, for example, in a sheet shape. The exterior material 30 is attached to the periphery of the battery cell 20 with, for example, an adhesive layer interposed therebetween. The exterior material 30 is a protective material for protecting the battery cell 20, and has a higher strength than, for example, a laminate sheet made of a resin. Accordingly, the battery cell 20 may be protected from an impact from the outside. The exterior material 30 may be formed of, for example, hard aluminum or stainless steel, or may be formed of a laminate obtained by laminating an electrically insulating resin layer on both surfaces of the hard aluminum layer. The resin layer may be a layer made of, for example, a polyethylene terephthalate (PET) resin. When the thickness of the exterior material 30 is, for example, about 0.1 mm, a strength that can withstand the handling by the user can be achieved.

### 1-2. Comparative Example

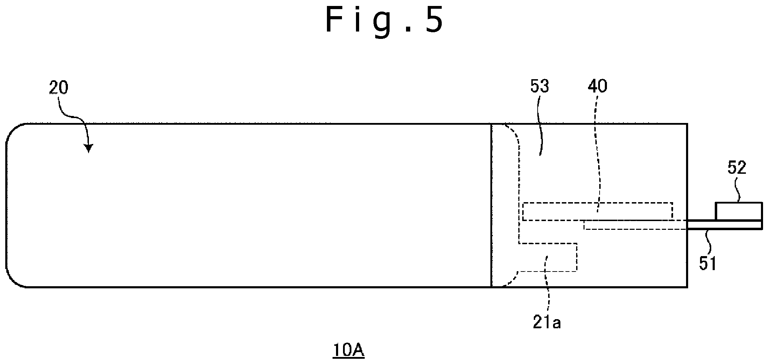

A configuration example of a battery pack 10A of a comparative example according to the present embodiment will be described below with reference to Fig. 5. Fig. 5 is a diagram depicting a configuration example of the battery pack 10A of the comparative example according to the present embodiment. The battery pack 10A of the comparative example is a general built-in battery pack.

As depicted in Fig. 5, in the battery pack 10A of the comparative example, a flexible circuit board 51 is connected to the circuit board 40. The flexible circuit board 51 includes a connector 52. The connector 52 is a component to be connected to a connector of the electronic apparatus on the apparatus body side. The flexible circuit board 51 is connected to the apparatus body of the electronic apparatus through the connector 52. The flexible circuit board 51 is mounted on, for example, an end of the circuit board 40 in the width direction. The circuit board 40 is fixed to the battery cell 20 by an adhesive insulating sheet 53.

In the battery pack 10A of the comparative example, the battery cell 20 is exposed, and the circuit board 40 and the battery cell 20 are fixed to each other by simply winding a tape such as the adhesive insulating sheet 53 around the end of the battery cell 20. The connector 52 requires a connection operation such as insertion and removal with respect to the connector on the apparatus body side. A double-sided tape is generally used to fix the battery pack 10A to the apparatus body, and a dedicated tool (special tool) or expertise is required to attach and detach the battery pack 10A.

On the other hand, according to the battery pack 10 of the present embodiment, the battery cell 20 is protected by the exterior material 30, and is further sandwiched between the top cover 11 and the bottom cover 12 and sealed in the internal space of the exterior material 30. Accordingly, the battery cell 20 is firmly bonded to the exterior material 30 by the top cover 11 and the bottom cover 12. The circuit board 40 is firmly bonded to the battery cell 20 and the exterior material 30 by the top cover 11. Accordingly, the rigidity of the battery pack 10 is increased, and thus the battery pack 10 that can withstand the handling by the user can be provided.

The exposed connection terminal 41 is present in the battery pack 10. Accordingly, it is sufficient only to mount the battery pack 10 on the apparatus body and bring the connection terminal 41 of the battery pack 10 into contact with the connection terminal on the apparatus body side, and connection work such as connecting the connector 52 to the apparatus body is not required. In order to fix the battery pack 10 to the apparatus body, for example, a hooking structure such as the protrusions 11b and 11c, or the recess 12a is used, and thus the dedicated tool and expertise are not required for attaching and detaching the battery pack 10, and the battery pack 10 can be easily attached and detached. That is, a protruding shape or a recessed shape is formed on the top cover 11 or the bottom cover 12 and a structure having a shape opposite to the protruding shape or the recessed shape is provided on the apparatus body side, and thus the battery pack 10 can be easily attached and detached.

In the structure of the attachable and detachable battery pack using the known pouch-type cell, the exterior thereof is generally a case made of a resin having a certain degree of strength. The exterior of the pouch-type cell is made of soft aluminum (O material) which is very thin and soft, and thus is easily damaged. The O material is aluminum softened by annealing processing. In the case of the case made of a resin, the thickness is required to be 0.3 mm or more in consideration of moldability (formability) and the like. The minimum thickness in the flame retardancy varies depending on the resin material. For example, polycarbonate is often used as the case material, and as an example, polycarbonate having a minimum thickness of 0.75 mm and a flame retardancy grade of V-0 (UL standard) is used. In consideration of moldability, flame retardancy, and the like, thinning of the case made of a resin is difficult.

Thus, as the exterior material 30, for example, hard aluminum (H material) or stainless steel is used. In this case, when a plate thickness is about 0.1 mm, the exterior material 30 can achieve a strength that can sufficiently withstand the handling by the user. The H material is a work-hardened aluminum. As compared with the case made of a resin, a complicated mold for molding is not required. Printing can be directly performed on the exterior material 30, and a label or the like is not required. The exterior material 30 serves as a support during molding of the top cover 11 and the bottom cover 12, and thus the top cover 11 and the bottom cover 12 are easily molded.

### 2. Second Embodiment

### 2-1. Configuration Example of Battery Pack

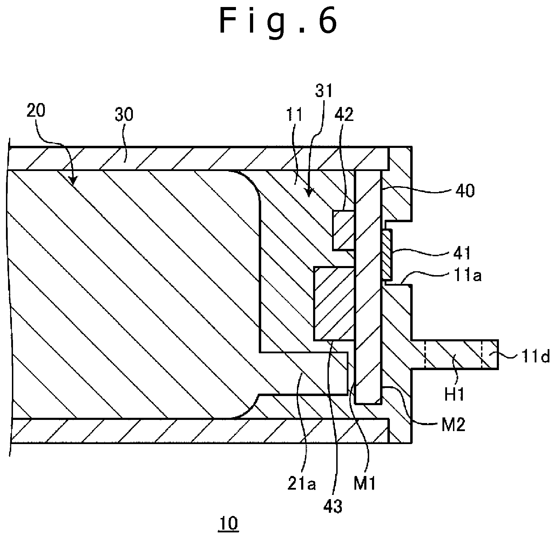

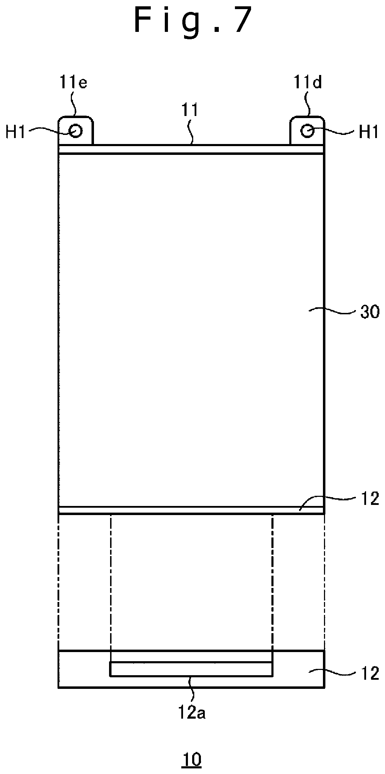

A configuration example of the battery pack 10 according to the present embodiment will be described with reference to Figs. 6 and 7. Fig. 6 is a cross-sectional view depicting the configuration example of the battery pack 10 according to the present embodiment. Fig. 7 is a diagram depicting a planar surface and a bottom surface of the configuration example of the battery pack 10 according to the present embodiment. The present embodiment is basically the same as the first embodiment, and the differences therebetween will be described.

As depicted in Figs. 6 and 7, in the present embodiment, the top cover 11 includes a plurality of protrusions 11d and 11e. The protrusions 11d and 11e are provided, for example, at both ends of the top surface of the top cover 11, and are formed in a rectangular shape in a plan view (see Fig. 7). Each of the protrusions 11d and 11e includes a through hole H1. For example, the through hole H1 of the protrusion 11d is formed substantially at the center of the protrusion 11d in a plan view, and the through hole 11e of the protrusion H1 is formed substantially at the center of the protrusion 11e in a plan view.

The protrusions 11d and 11e function as fixing portions for fixing the battery pack 10 to the apparatus body of the electronic apparatus. Female screws each corresponding to the through hole H1 of a respective one of the protrusions 11d and 11e are formed in the apparatus body of the electronic apparatus. The recess 12a of the bottom cover 12 is fitted to the protrusion of the apparatus body, and the through hole H1 of each of the protrusions 11d and 11e is aligned with a respective one of the female screws of the apparatus body, and the battery pack 10 is provided in the apparatus body. Thereafter, male screws are each turned into a respective one of the female screws of the apparatus body, and the battery pack 10 is fixed to the apparatus body.

The inner peripheral surface of the through hole H1 of each of the protrusions 11d and 11e may be threaded to form a screw hole in both the protrusions 11d and 11e, or the inner peripheral surface of the through hole H1 of one of the protrusions 11d and 11e may be threaded to form a screw hole in one of the protrusions 11d and 11e.

According to the present embodiment, as in the first embodiment, the rigidity of the battery pack 10 can be improved. Further, as in the first embodiment, the dedicated tool and expertise are not required for attaching and detaching the battery pack 10, and the battery pack 10 can be easily attached and detached.

### 2-2. Modification

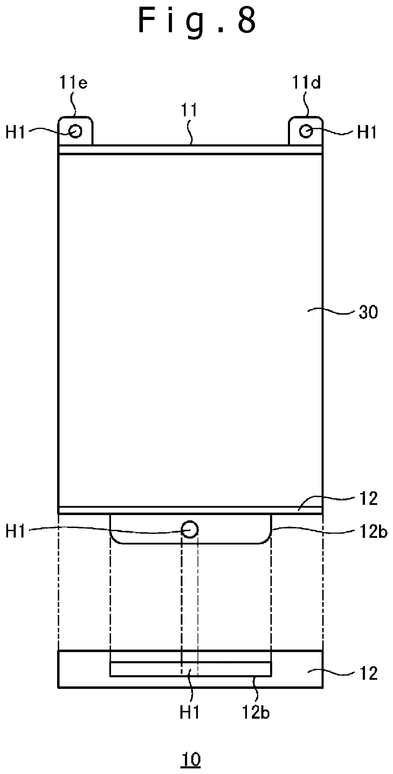

A configuration example of the battery pack 10 of a modification according to the present embodiment will be described below with reference to Fig. 8. Fig. 8 is a diagram depicting a planar surface and a bottom surface of the configuration example of the modification of the battery pack 10 according to the present embodiment.

As depicted in Fig. 8, in the modification, the bottom cover 12 includes a protrusion 12b. The protrusion 12b is provided at, for example, the center of the bottom surface of the bottom cover 12, and is formed in a rectangular shape in a plan view. The protrusion 12b includes the through hole H1. For example, the through hole H1 of the protrusion 12b is formed substantially at the center of the protrusion 12b in a plan view.

Such a protrusion 12a functions as a fixing portion for fixing the battery pack 10 to the apparatus body of the electronic apparatus. A female screw corresponding to the through hole H1 of the protrusion 12b is formed in the apparatus body of the electronic apparatus. The through hole H1 of the protrusion 12b of the bottom cover 12 and each of the through holes H1 of a respective one of the protrusions 11d and 11e is aligned with a respective one of the female screws of the apparatus body, and the battery pack 10 is provided in the apparatus body. Thereafter, male screws are each turned into a respective one of the female screws of the apparatus body, and the battery pack 10 is fixed to the apparatus body.

According to the modification, as in the first embodiment, the rigidity of the battery pack 10 can be improved. Further, as in the first embodiment, the dedicated tool and expertise are not required for attaching and detaching the battery pack 10, and the battery pack 10 can be easily attached and detached.

In the above-described embodiments (including the modifications), any of the protrusions 11b, 11c, 11d, 11e, and 12b, and the recess 12a are provided in both the top cover 11 and the bottom cover 12, but may be provided in, for example, only one of the top cover 11 and the bottom cover 12. The number of installations of any of the protrusions 11b, 11c, 11d, 11e, 12b, and recess 12a may be one or more, and the installation positions of any of the protrusions 11b, 11c, 11d, 11e, 12b, and recess 12a are not limited.

### 3. Manufacturing Method for Battery Pack According to Each Embodiment

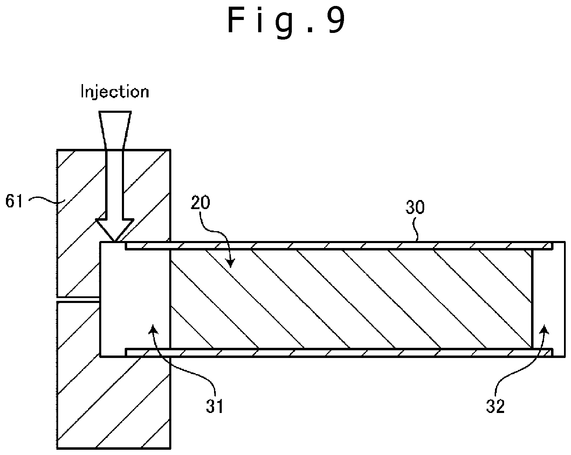

A manufacturing method for the battery pack 10 according to each embodiment will be described with reference to Fig. 9. Fig. 9 is a diagram describing an example of a manufacturing method for the battery pack 10 according to each embodiment. In the example of Fig. 9, components (for example, the circuit board 40 and the like) other than the battery cell 20 and the exterior material 30 are omitted.

As depicted in Fig. 9, in the example of the manufacturing method, a mold 61 for injection molding is used. The injection molding is a method of performing molding by injecting a material melted by heating from a cylinder or the like into the mold 61 to fill the mold 61 with the material, and then cooling the material to solidify the material. According to the injection molding, low-temperature resin molding can be achieved.

The mold 61 may be shared for molding the top cover 11 and the bottom cover 12, or may be prepared for each molding of the top cover 11 and the bottom cover 12. For example, even when the mold 61 is shared for molding the top cover 11 and the bottom cover 12, another mold component may be added to the mold 61 or the mold components may be removed from the mold 61 as necessary for each molding of the top cover 11 and the bottom cover 12.

In a manufacturing process of the battery pack 10,the exterior material 30 is wound around the battery cell 20, and the battery cell 20 around which the exterior material 30 is wound is prepared. The end of the battery cell 20 around which the exterior material 30 is wound is inserted into the mold 61. Specifically, the top portion 31 of the exterior material 30 wound around the battery cell 20 is inserted into the mold 61. Next, a resin material (an example of a material for forming the top cover 11) in a state of being melted by heating is injected into the mold 61, and the top portion 31 of the exterior material 30 is filled with the resin material. Thereafter, the resin material used for filling is cooled and solidified. Accordingly, the top cover 11 having a shape based on the mold 61 is formed on the top portion 31 of the exterior material 30. At this time, the top cover 11 is fixed to the battery cell 20, the circuit board 40, and the exterior material 30, and firmly bonds the battery cell 20, the circuit board 40, and the exterior material 30.

Next, the bottom portion 32 of the exterior material 30 wound around the battery cell 20 is inserted into the mold 61. Next, a resin material (an example of a material for forming the bottom cover 12) in a state of being melted by heating is injected into the mold 61, and the bottom portion 32 of the exterior material 30 is filled with the resin material. Thereafter, the resin material used for filling is cooled and solidified. Accordingly, the bottom cover 12 having a shape based on the mold 61 is formed on the bottom portion 32 of the exterior material 30. At this time, the bottom cover 12 is fixed to the battery cell 20, the circuit board 40, and the exterior material 30, and firmly bonds the battery cell 20, the circuit board 40, and the exterior material 30.

The top cover 11 and the bottom cover 12 are formed by such resin filling. Accordingly, the battery cell 20, the circuit board 40, and the exterior material 30 are integrated, and thus the rigidity of the battery pack 10 is improved, and the battery pack 10 can have rigidity sufficient to withstand the handling by the user. For example, the battery pack 10 has a strength sufficient to withstand an impact such as when the user accidentally drops the battery pack 10. The exterior material 30 serves as a support during molding of the top cover 11 and the bottom cover 12, and thus the top cover 11 and the bottom cover 12 can be easily molded.

In the above description, the top cover 11 is formed before the bottom cover 12, but conversely, the bottom cover 12 may be formed before the top cover 11, or the top cover 11 and the bottom cover 12 may be formed at the same time. The top cover 11 and the bottom cover 12 may be formed of the same material or different materials.

### 4. Application Example of Battery Pack According to Each Embodiment

### 4-1. Configuration Example of Electronic Apparatus

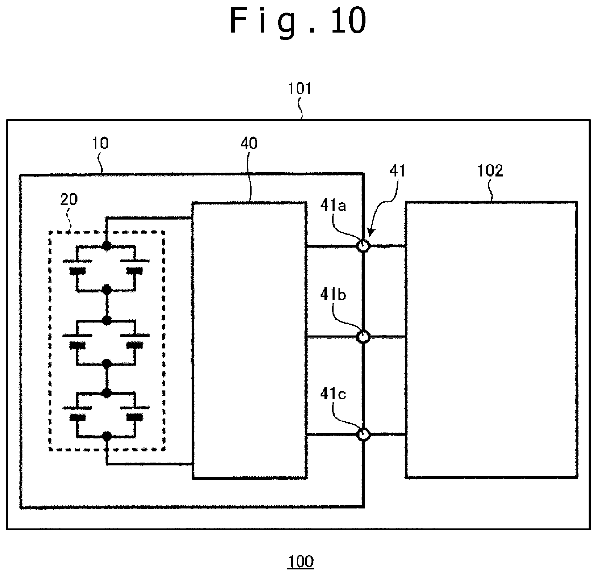

A configuration example of an electronic apparatus 100 including the battery pack 10 according to any of the above-described embodiments will be described with reference to Fig. 10. Fig. 10 is a diagram depicting a configuration example of the electronic apparatus 100 including the battery pack 10 according to any of the above-described embodiments.

As depicted in Fig. 10, the electronic apparatus 100 includes an apparatus body 101, an electronic circuit 102, and the battery pack 10.

The apparatus body 101 is a housing that accommodates the electronic circuit 102, the battery pack 10, and the like. The electronic circuit 102 controls the entire electronic apparatus 100. The electronic circuit 102 includes, for example, a central processing unit (CPU), a peripheral logic unit, an interface unit, and a storage unit.

The battery pack 10 includes the battery cell 20, the circuit board 40, and the like as described above, which are electrically connected to the electronic circuit 102 through the connection terminals 41. In the example of Fig. 10, the connection terminals 41 include a positive electrode terminal 41a, a negative electrode terminal 41b, and a temperature terminal 41c. Gold-plated terminals can be used as the positive electrode terminal 41a, the negative electrode terminal 41b, and the temperature terminal 41c, for example.

The battery pack 10 is configured to be attachable to and detachable from the apparatus body 101 by the user, for example. The battery pack 10 may be configured not to be attachable to and detachable from the apparatus body 101 by the user.

When the battery pack 10 is mounted on the apparatus body 101, the positive electrode terminal 41a, the negative electrode terminal 41b, and the temperature terminal 41c of the battery pack 10 are connected to the positive terminal, the negative terminal, and the temperature terminal of the electronic circuit 102 of the apparatus body 101, respectively. The battery pack 10 is charged, for example, in a state of being mounted on the apparatus body 101.

However, when the battery pack 10 is attachable to and detachable from the apparatus body 101 by the user, for example, the battery pack 10 may be detached from the apparatus body 101 and mounted on a charger, and the battery pack 10 may be charged. At this time, the positive electrode terminal 41a, the negative electrode terminal 41b, and the temperature terminal 41c of the battery pack 10 are connected to the positive electrode terminal, the negative electrode terminal, and the temperature terminal of the charger, respectively.

In the electronic apparatus 100 having such a configuration, by applying the battery pack 10 according to any of the above-described embodiments, the electronic apparatus 100 including the battery pack 10 that can withstand the handling by the user and has high rigidity can be provided.

The electronic apparatus 100 may be an electronic apparatus of a portable type or an electronic apparatus other than the electronic apparatus of the portable type. Examples of the electronic apparatus 100 include a mobile phone such as a smartphone, a personal computer such as a tablet type or a notebook type, a portable information terminal such as a personal digital assistant (PDA), a digital still camera, a video camera, a wearable device, a game apparatus, a music apparatus, an electronic book, an electronic dictionary, a display device, and a navigation system, but are not limited to these examples.

### 5. Operations and Effects of Each Embodiment

As described above, according to each embodiment, the electronic apparatus 100 includes the apparatus body 101 and the battery pack 10 provided in the apparatus body 101, and the battery pack 10 includes the battery cell 20, the exterior material 30 wound around the battery cell 20, and the top cover 11 and the bottom cover 12 provided in the opening portions (for example, the top portion 31 and the bottom portion 32) at both ends of the exterior material 30 so as to sandwich the battery cell 20 around which the exterior material 30 is wound, and sealing the battery cell 20 (see Figs. 1 to 4 and the like). Accordingly, the battery cell 20 is sandwiched between the top cover 11 and the bottom cover 12 and sealed in the internal space of the exterior material 30, and is firmly bonded to the exterior material 30 by the top cover 11 and the bottom cover 12. Thus, the rigidity of the battery pack 10 can be improved.

The top cover 11 and the bottom cover 12 may be formed by filling the opening portions (for example, the top portion 31 and the bottom portion 32) at both ends of the exterior material 30 with the resin material (see Fig. 3). Accordingly, the rigidity of the battery pack 10 can be reliably improved.

The surface of the top cover 11 on the battery cell 20 side and the surface of the bottom cover 12 on the battery cell 20 side may be in contact with the battery cell 20 (see Fig. 3). Accordingly, the rigidity of the battery pack 10 can be reliably improved.

The entire surface of the top cover 11 on the battery cell 20 side and the entire surface of the bottom cover 12 on the battery cell 20 side may be in contact with the battery cell 20 (see Fig. 3). Accordingly, the rigidity of the battery pack 10 can be further reliably improved.

The battery pack 10 may further include the circuit board 40 electrically connected to the battery cell 20, and the top cover 11 may cover and seal the circuit board 40 (see Fig. 3). Accordingly, the circuit board 40 is firmly bonded to the battery cell 20 and the exterior material 30 by the top cover 11, and thus the rigidity of the battery pack 10 can be reliably improved.

The circuit board 40 may include the connection terminal 41 connected to the apparatus body 101, and the top cover 11 may cover the circuit board 40 while exposing the connection terminal 41 (see Fig. 3). Accordingly, since the battery pack 10 is electrically connected to the apparatus body 101, the connection work is completed only by mounting the battery pack 10 on the apparatus body 101 and bringing the connection terminal 41 of the battery pack 10 into contact with the connection terminal on the apparatus body 101 side, troublesome connection work is not required, and the battery pack 10 can be easily attached and detached.

The circuit board 40 has the first principal surface M1 on the battery cell 20 side and the second principal surface M1 on the opposite side to the first principal surface M2, and the connection terminal 41 may be provided on the second principal surface M2 (see Fig. 3). Accordingly, the connection terminal 41 can be easily exposed from the top cover 11.

The first principal surface M1 and the second principal surface M2 may be parallel to the surface of the battery cell 20 on the first principal surface M1 side (see Fig. 3). Accordingly, the circuit board 40 is parallel to the surface of the battery cell 20 on the first principal surface M1 side, and thus the battery pack 10 can be miniaturized as compared with a case in which the circuit board 40 is orthogonal to the surface of the battery cell 20 on the first principal surface M1 side.

The top cover 11 may include the protrusion (for example, the protrusions 11b and 11c) or the recess (for example, the recess 12a) for fixing the battery pack 10 to the apparatus body 101 (see Figs. 3 and 4). Accordingly, since the battery pack 10 can be easily fixed to the apparatus body 101, the dedicated tool and expertise are not required for attaching and detaching the battery pack 10, and the battery pack 10 can be easily attached and detached.

The top cover 11 includes the above-described protrusions (for example, the protrusions 11d and 11e), and the protrusions may include the through hole H1 (see Figs. 6 to 8). Accordingly, since the battery pack 10 can be easily fixed to the apparatus body 101, the dedicated tool and expertise are not required for attaching and detaching the battery pack 10, and the battery pack 10 can be easily attached and detached.

The bottom cover 12 may include the protrusion (for example, the protrusion 12b) or the recess (for example, the recess 12a) for fixing the battery pack 10 to the apparatus body 101 (see Figs. 3, 4, 7, and 8). Accordingly, since the battery pack 10 can be easily fixed to the apparatus body 101, the dedicated tool and expertise are not required for attaching and detaching the battery pack 10, and the battery pack 10 can be easily attached and detached.

The bottom cover 12 includes the above-described protrusion (for example, the protrusion 12b), and the protrusion may include the through hole H1 (see Fig. 8). Accordingly, since the battery pack 10 can be easily fixed to the apparatus body 101, the dedicated tool and expertise are not required for attaching and detaching the battery pack 10, and the battery pack 10 can be easily attached and detached.

The exterior material 30 may be formed of hard aluminum (see Figs. 2 and 3). Accordingly, the exterior material 30 can achieve a strength that can sufficiently withstand the handling by the user.

### 6. Other Embodiments

Each configuration, processing, and the like according to the above-described embodiments (including examples and modifications) may be implemented in various forms other than the above embodiments. For example, the configurations and processing are not limited to the above-described examples, but may take various modes. In addition, for example, unless otherwise specified, the configurations, processing procedures, specific names, or information including various data and parameters explained in the above description and drawings may be arbitrarily modified.

Further, each configuration, processing, and the like according to the above-described embodiments (including examples and modifications) are not necessarily required to be physically configured as illustrated. That is, the specific form of distribution or integration of each configuration and processing is not limited to the illustrated examples, and all or part thereof may be functionally or physically distributed or integrated in arbitrary units depending on various loads, usage conditions, and the like.

Further, each configuration, processing, and the like according to the above-described embodiments (including examples and modifications) may be appropriately combined. For example, at least a part of one embodiment may be appropriately combined with at least a part of another embodiment. In addition, the effects in the embodiments are merely illustrative and not limiting, and other effects may also be obtained.

### 7. Supplementary Notes

The present technology may also adopt configurations as described below.
(1) An electronic apparatus including
   an apparatus body, and
   a battery pack provided in the apparatus body, wherein
   the battery pack includes
   a battery cell,
   an exterior material wound around the battery cell, and
   a top cover and a bottom cover provided at opening portions at both ends of the exterior material so as to sandwich the battery cell around which the exterior material is wound, and sealing the battery cell.
(2) The electronic apparatus according to (1), wherein
   the top cover and the bottom cover are formed by filling the opening portions at both ends of the exterior material with a resin material.
(3) The electronic apparatus according to (1) or (2), wherein
   a surface of the top cover on the battery cell side and a surface of the bottom cover on the battery cell side are in contact with the battery cell.
(4) The electronic apparatus according to (3), wherein
   the entire surface of the top cover on the battery cell side and the entire surface of the bottom cover on the battery cell side are in contact with the battery cell.
(5) The electronic apparatus according to any one of (1) to (4), wherein
   the battery pack further includes a circuit board electrically connected to the battery cell, and
   the top cover covers and seals the circuit board.
(6) The electronic apparatus according to (5), wherein
   the circuit board includes a connection terminal connected to the apparatus body, and
   the top cover covers the circuit board while exposing the connection terminal.
(7) The electronic apparatus according to (6), wherein the circuit board includes
   a first principal surface on the battery cell side, and
   a second principal surface on the opposite side to the first principal surface, and
   the connection terminal is provided on the second principal surface.
(8) The electronic apparatus according to (7), wherein
   the first principal surface and the second principal surface are parallel to a surface of the battery cell on the first principal surface side.
(9) The electronic apparatus according to any one of (1) to (8) wherein
   the top cover includes a protrusion or a recess for fixing the battery pack to the apparatus body.
(10) The electronic apparatus according to (9), wherein
   the top cover includes the protrusion, and
   the protrusion includes a through hole.
(11) The electronic apparatus according to any one of (1) to (10), wherein
   the bottom cover includes a protrusion or a recess for fixing the battery pack to the apparatus body.
(12) The electronic apparatus according to (11), wherein
   the bottom cover includes the protrusion, and
   the protrusion includes a through hole.
(13) The electronic apparatus according to any one of (1) to (12), wherein
   the exterior material is formed of hard aluminum.
(14) A battery pack including
   a battery cell,
   an exterior material wound around the battery cell, and
   a top cover and a bottom cover provided at opening portions at both ends of the exterior material so as to sandwich the battery cell around which the exterior material is wound, and sealing the battery cell.
(15) A manufacturing method for a battery pack, including
   winding an exterior material around a battery cell, and
   providing a top cover and a bottom cover at opening portions at both ends of the exterior material so as to sandwich the battery cell around which the exterior material is wound, and sealing the battery cell.
(16) A battery pack included in the electronic apparatus according to any one of (1) to (13).
(17) A manufacturing method for the battery pack included in the electronic apparatus according to any one of (1) to (13).

### Reference Signs List

10 Battery pack
10A Battery pack
11 Top cover
11a Opening portion
11b Protrusion
11c Protrusion
11d Protrusion
11e protrusion
12 Bottom cover
12a Recess
12b Protrusion
20 Battery cell
21a Positive electrode terminal
21b Negative electrode terminal
30 Exterior material
31Top portion
32 Bottom portion
40 Circuit board
41 Connection terminal
41a Positive electrode terminal
41b Negative electrode terminal
41c Temperature terminal
42 Temperature detection element
43 Various elements
51 Flexible circuit board
52 Connector
53 Adhesive insulating sheet
61 Mold
100 Electronic apparatus
101 Apparatus body
102 Electronic circuit
H1 Through hole
M1 First principal surface
M2 Second principal surface

## Claims

1. An electronic apparatus comprising:
an apparatus body; and
a battery pack provided in the apparatus body, wherein
the battery pack includes
a battery cell,
an exterior material wound around the battery cell, and
a top cover and a bottom cover provided at opening portions at both ends of the exterior material so as to sandwich the battery cell around which the exterior material is wound, and sealing the battery cell.

2. The electronic apparatus according to claim 1, wherein
the top cover and the bottom cover are formed by filling the opening portions at both ends of the exterior material with a resin material.

3. The electronic apparatus according to claim 1, wherein
a surface of the top cover on the battery cell side and a surface of the bottom cover on the battery cell side are in contact with the battery cell.

4. The electronic apparatus according to claim 3, wherein
the entire surface of the top cover on the battery cell side and the entire surface of the bottom cover on the battery cell side are in contact with the battery cell.

5. The electronic apparatus according to claim 1, wherein
the battery pack further includes a circuit board electrically connected to the battery cell, and
the top cover covers and seals the circuit board.

6. The electronic apparatus according to claim 5, wherein
the circuit board includes a connection terminal connected to the apparatus body, and
the top cover covers the circuit board while exposing the connection terminal.

7. The electronic apparatus according to claim 6, wherein
the circuit board includes
a first principal surface on the battery cell side, and
a second principal surface on the opposite side to the first principal surface, and
the connection terminal is provided on the second principal surface.

8. The electronic apparatus according to claim 7, wherein
the first principal surface and the second principal surface are parallel to a surface of the battery cell on the first principal surface side.

9. The electronic apparatus according to claim 1, wherein
the top cover includes a protrusion or a recess configured to fix the battery pack to the apparatus body.

10. The electronic apparatus according to claim 9, wherein
the top cover includes the protrusion, and
the protrusion includes a through hole.

11. The electronic apparatus according to claim 1, wherein
the bottom cover includes a protrusion or a recess configured to fix the battery pack to the apparatus body.

12. The electronic apparatus according to claim 11, wherein
the bottom cover includes the protrusion, and
the protrusion includes a through hole.

13. The electronic apparatus according to claim 1, wherein
the exterior material is formed of hard aluminum.

14. A battery pack comprising:
a battery cell;
an exterior material wound around the battery cell; and
a top cover and a bottom cover provided at opening portions at both ends of the exterior material so as to sandwich the battery cell around which the exterior material is wound, and sealing the battery cell.

15. A manufacturing method for a battery pack, comprising:
winding an exterior material around a battery cell; and
providing a top cover and a bottom cover at opening portions at both ends of the exterior material so as to sandwich the battery cell around which the exterior material is wound, and sealing the battery cell.
